# EUROPÄISCHE PATENTSCHRIFT

(11) **EP 2 655 767 B1**
(45) Veröffentlichungstag und Bekanntmachung des Hinweises auf die Patenterteilung: **05.08.2015**
(21) Anmeldenummer: 11763926.0
(22) Anmeldetag: 29.09.2011
(51) Int. Cl.: E05D 11/00, G08B 13/02

(54) **VERFAHREN UND VORRICHTUNG ZUR KONTAKTLOSEN ÜBERTRAGUNG VON ELEKTRISCHER ENERGIE ZWISCHEN EINER WAND UND EINEM AN DIESER WAND BEFESTIGTEN FLÜGEL**
METHOD AND APPARATUS FOR CONTACTLESS TRANSMISSION OF ELECTRICAL ENERGY BETWEEN A WALL AND A DOOR LEAF FASTENED TO THIS WALL
PROCÉDÉ ET DISPOSITIF DE TRANSMISSION SANS CONTACT D'ÉNERGIE ÉLECTRIQUE ENTRE UNE PAROI ET UN BATTANT FIXÉ À CETTE PAROI

(30) Priorität: 22.12.2010 DE 102010061471
(43) Veröffentlichungstag der Anmeldung: 30.10.2013
(73) Patentinhaber: Dr. Hahn GmbH & Co. KG, 41189 Mönchengladbach-Wickrath (DE)
(72) Erfinder: MEYER, Eckhard, 41352 Korschenbroich (DE); HAHN, Walter, 41189 Mönchengladbach-Wickrath (DE)
(74) Vertreter: Kluin, Jörg-Eden
(86) Internationale Anmeldenummer: PCT/EP2011/066998
(87) Internationale Veröffentlichungsnummer: WO 2012/045658

(56) Entgegenhaltungen:
- EP-A2- 0 316 872
- EP-A2- 0 451 445
- WO-A1-2010/049292
- DE-A1- 3 915 812
- DE-A1- 4 322 811

## Beschreibung

Die Erfindung betrifft ein Verfahren und eine Vorrichtung zur kontaktlosen Übertragung von elektrischer Energie zwischen einer Wand und einem an dieser Wand um eine Scharnierachse scharniergelenkig befestigten Flügel, bei dem eine an der Wand befestigte Primär-Leistungsspule und eine an dem Flügel befestigte Sekundär-Leistungsspule vorgesehen sind, die sich mit Hilfe eines Bandbolzens in induktiver Wirkverbindung befinden.

Eine solche Vorrichtung ist aus DE 39 15 812 A1 bekannt, dieses Dokument offenbart die Merkmale des Oberbegriffs des Anspruchs 1.

Insbesondere Flügel von Türen für Objekte wie Häuser, Geschäfte oder Produktionshallen weisen in zunehmendem Maße die Sicherheit oder den Komfort verbessernde Einrichtungen auf, deren jeweils aktueller Betriebszustand und deren Betätigung durch außerhalb der Tür angeordnete Überwachungs- oder Betätigungseinrichtungen überwacht oder betätigt wird und welche Betriebszustandsänderungen oder eventuell von Sensoren empfangene Signale an die Überwachungs- oder Betätigungseinrichtungen senden.

Beispielhaft sei hier eine in einem Gebäude installierte Einbruchmeldezentrale genannt, die mit an der Tür vorgesehenen Einrichtungen beispielsweise zur Öffnungs-, Durchbruch-, Verschluss-, Sabotage- oder Motorschlossüberwachung kommuniziert.

Zur Übertragung von entsprechenden Signalen und elektrischen Leistungen zwischen der Überwachungseinrichtung und den an der Tür befindlichen Einrichtungen finden im Stand der Technik vieladrige Kabel Verwendung, die zwischen dem Flügel und dem Rahmen flexibel verlegt und häufig zum Schutz von einem flexiblen Metallschlauch umgeben sind.

Diese Kabelübergänge beeinträchtigen das optische Erscheinungsbild erheblich und können beim Schließen des Flügels eingeklemmt werden, was zu Beschädigungen oder sogar zu Zerstörungen der Kabel führen kann. Darüber hinaus stellen die Kabelübergänge hinsichtlich möglicher Manipulationen Schwachstellen dar, weswegen zum Sabotageschutz eine sogenannte Z-Verdrahtung von Sensoren oder Kontakten auch in dem Kabelübergang verwirklicht ist.

Aus der DE 10 2004 017 341 A1 ist ein Band mit einem eingebauten Trafo für eine kontaktlose Energieübertragung bekannt. Dieses Band umfasst eine in einem Rahmenbandteil angeordnete Primärspule und eine in einem Flügelbandteil angeordnete Sekundärspule. Der magnetischen Ankopplung der Sekundärspule an die Primärspule, die in Richtung der Scharnierachse voneinander beabstandet sind, dient ein beide Spulen durchsetzender Eisenkern, der zugleich den Bandbolzen bildet.

Zwar ist prinzipiell eine kontaktlose Übertragung von elektrischer Energie und/oder elektrischen Signalen zwischen einer Wand und einem an dieser Wand befestigten Flügel mit dieser Anordnung möglich, eine durchgehende Ausbildung dieser Z-Verdrahtung ist bei dieser induktiven Energie- und/oder Signalübertragung jedoch nicht möglich, worunter der Sabotageschutz leidet.

Aus der DE 39 15 812 A1 ist eine Vorrichtung zum Verschließen eines Raumes wie Fenster, Glastür oder dergleichen mit einem mittels Bändern zumindest verschwenkbar angelenkten Rahmenteil mit mindestens einer Scheibe und einem Alarmgeber bekannt. Diese Vorrichtung umfasst primär, d.h. rahmenseitig eine innere Spule, an welcher eine Primär-Wechselspannung anliegt. Diese innere Spule ist umgeben von einer äußeren Spule, in welcher eine Sekundärspannung zum Betrieb einer am Flügel vorgesehenen Sensoranordnung induziert wird. Diese Sensoranordnung kann beispielsweise einen Einbruchsensor aufweisen, dessen Signale nach einer Frequenzmodulation von der Sekundärseite zur Primärseite über die äußere und die innere Spule übertragen werden können.

Aus der EP 316 872 A2 ist eine Alarmgeberanordnung mit einer auf einer zu überwachenden bewegbaren Glasscheibe oder Tür angeordneten Überwachungseinheit, mit einem Alarmgeber und einem in der Sollstellung der Glasscheibe oder Tür induktiv an die Übertragungseinheit angekoppelten ortsfesten Verteiler, der mit einer Meldezentrale verbunden ist, bekannt. Der ortsfeste Verteiler weist für die induktive Ankopplung an eine Schwingkreisübertragungseinheit einen Schwingkreis auf, der durch einen taktgesteuerten Wechselschalter in einer ersten Schalter-Stellung mit einem ersten Oszillator verbunden ist, um als Sender zu arbeiten, und in einer zweiten Schalter-Stellung mit einer Signalauswerteschaltung für von der Übertragungseinheit abgegebene Signale verbunden ist, um als Empfänger zu arbeiten. Somit können sowohl die Informationen über die Position der Übertragungseinheit, als auch die Versorgungsenergie über eine einzige Übertragungsstrecke übertragen werden. Beispielsweise kann der Schwingkreis der Übertragungseinheit unterbrochen oder kurzgeschlossen werden, wodurch das Nachschwingen dieses Schwingkreises der Übertragungseinheit und damit ein Quittungssignal unterbleibt.

Der Erfindung liegt die Aufgabe zugrunde, ein hinsichtlich des Sabotageschutzes verbessertes Verfahren und eine zur Durchführung dieses Verfahrens vorgesehene Vorrichtung zur kontaktlosen Übertragung von elektrischer Energie zwischen einer Wand und einem an dieser Wand befestigten Flügel, bei dem eine an der Wand befestigte erste Spule und eine an dem Flügel befestigte zweite Spule vorgesehen sind, die sich in induktiver Wirkverbindung befinden, zu schaffen.

Diese Aufgabe wird durch das in Anspruch 1 wiedergegebene Verfahren und durch die in Anspruch 4 wiedergegebene Vorrichtung gelöst.

Bei dem erfindungsgemäßen Verfahren wird die in der Sekundär-Leistungsspule induzierte Sekundär-Leistungsspannung erfasst und mit einem vorgegebenen Sollwert, der regelmäßig durch die Betriebsspannung der flügelseitigen, elektrischen Verbraucher vorgegeben ist, verglichen. Die an der Primär-Leistungsspule angelegte Primär-Leistung wird anhand des Sekundär-Leistungsspannungs-Soll/Istwertvergleich beeinflusst, vorzugsweise geregelt. Liegt der Istwert der Sekundär-Leistungsspannung unter dem Sollwert, so wird die Primär-Leistung erhöht, bis der Sekundärspannungs-Istwert dem Sollwert entspricht.

Die Beeinflussung der Primärleistung kann beispielsweise durch Beeinflussung der Primärspannung oder, besonders bevorzugt, durch Pulsweitenmodulation erfolgen. Beispielsweise kann die Primärspannung einen bestimmten, konstanten Spannungswert aufweisen und die Primärleistung durch Veränderung des Tastverhältnisses beispielsweise zwischen 50/50 (maximale Leistung) und 10/90 (minimale Leistung) beeinflusst werden.

Der zum Erzielen des Sollwerts der Sekundär-Leistungsspannung erforderliche Primär-Leistungswert wird erfasst. Beim Übersteigen eines vorbestimmten Primär-Leistungswerts wird ein Signal ausgelöst. Dieses kann beispielsweise der Ansteuerung einer Gefahrenmeldeanlage dienen.

Dem erfindungsgemäßen Verfahren liegt die überraschende Erkenntnis zugrunde, dass bereits geringfügige Veränderungen der Lage des Bandbolzens zu einer derart großen Veränderung des induktiven Widerstands der Primär- und der Sekundär-Leistungsspulen führt, dass zur Induktion eines bestimmten SekundärLeistungs-Istwerts eine deutlich erhöhte Primär-Leistung erforderlich ist. Die plötzliche Erhöhung der erforderlichen Primär-Leistung kann daher auf einen Sabotage- oder Einbruchversuch hindeuten, der mit dem erfindungsgemäßen Verfahren erkannt wird.

Der erfasste Sekundär-Leistungsspannungswert wird vorzugsweise in ein spannungswertabhängig moduliertes elektrisches Signal umgeformt und die Sekundär-Leistungsspule wird mit diesem Signal beaufschlagt. Hierdurch wird in der PrimärLeistungsspule ein sekundär-leistungsspannungsabhängiges Signal induziert, welches demoduliert zur Beeinflussung, insbesondere Regelung der Primär-Leistung verwendet werden kann.

Die erfindungsgemäße Vorrichtung zur kontaktlosen Übertragung von elektrischer Energie zwischen einer Wand und einem an dieser Wand um eine Scharnierachse scharniergelenkig befestigten Flügel umfasst eine an der Wand befestigbare Primär-Leistungsspule, eine an dem Flügel befestigbare Sekundär-Leistungsspule, und einen als magnetischer Flussleitkörper zwischen der Primär-Leistungsspule und der Sekundär-Leistungsspule dienenden Bandbolzen. Erfindungsgemäß ist ein sekundärseitiger Modulator vorgesehen, welcher die Sekundär-Leistungsspule mit einem sekundärspannungsabhängigen, modulierten, vorzugsweise amplitudenmodulierten, Signal beaufschlagt. Ferner ist ein primärseitiger Demodulator vorgesehen, welcher das in der Primär-Leistungsspule aufgrund des sekundärspannungsabhängigen, modulierten Signals induzierte Signal demoduliert und eine Einrichtung zur Beeinflussung, vorzugsweise Regelung der Primär-Leistung zuführt. Ferner ist eine Einrichtung zur Ermittlung einer Soll/Istwert-Abweichung der Sekundär-Leistungsspannung vorgesehen, die mit der Einrichtung zur Beeinflussung der Primär-Leistung wirkverbunden ist und diese im Sinne eines Soll/Istwert-Abgleichs ansteuert. Schließlich umfasst die erfindungsgemäße Vorrichtung eine Einrichtung, die beim Übersteigen einer vorbestimmten Primär-Leistung ein Signal auslöst, da - wie weiter oben beschrieben - eine zunehmende Differenz zwischen den Primär- und den Sekundär-Leistungsspannungen auf einen Sabotage- oder Einbruchsversuch, der ein Verlagern des Bandbolzens beinhaltet, hindeuten kann.

Zur Beeinflussung der Primär-Leistung umfasst die erfindungsgemäße Einrichtung einen Schaltregler und/oder einen Pulsweiten-Modulator.

Darüber hinaus ist - besonders bevorzugt - eine Primär-Leistungselektronik vorgesehen, welche einen Primär-Leistungsprozessor aufweist, der zumindest der Ermittlung der Soll/Istwert-Abweichung der Sekundär-Leistungsspannung dient.

Ferner kann ein die in der Sekundärspule induzierte Sekundär-Leistungsspannung in eine Gleichspannung umwandelnder Gleichrichter vorgesehen sein, sofern die flügelseitigen Verbraucher gleichspannungsbetrieben sind. Der Gleichrichter ist vorzugsweise zwecks Übermittlung des Gleichspannungsistwerts mit dem Sekundär-Leistungsprozessor verbunden.

Darüber hinaus kann der Sekundär-Leistungsprozessor mit dem Modulator zwecks Ansteuerung entsprechend des Gleichspannungsistwerts wirkverbunden sein.

Des Weiteren kann die Primär-Leistungselektronik einen Wechselrichter umfassen. Die Vorrichtung ist dann zum Anschluss an eine wandseitige Gleichspannungsquelle, beispielsweise an einen Gleichstromausgang eines Notstromgepufferten Netzteils einer Gefahrenmeldeanlage geeignet.

Die Primär-Leistungselektronik kann zur Verbesserung der Betriebssicherheit einen Tiefpass zum Ausfiltern von Störfrequenzen umfassen.

Sollten bei der erfindungsgemäßen Vorrichtung die Primär- und Sekundär-Leistungsspulen auch zur bidirektionalen Signal- oder Datenübertragung dienen, oder hierzu separate erste und zweite Spulen vorhanden sein, so können in einem bestimmten Zeitintervall die Primär-Leistungsspule oder die erste Spule mit mindestens einem ersten Kontrollsignal beaufschlagt und das mindestens eine in der Sekundär-Leistungsspule oder in der zweiten Spule induzierte erste Signal erfasst werden.

Ferner wird in dem oben genannten Zeitintervall die zweite Spule mit mindestens einem zweiten Kontrollsignal beaufschlagt und das mindestens eine in der ersten Spule induzierte zweite Signal wird ebenfalls erfasst. Sollte bei dieser bidirektionalen Signalübertragung eine Spule nicht mit zumindest einem Teil der erwarteten Kontrollsignale beaufschlagt werden oder in den Spulen nicht zumindest ein Teil aufgrund der Kontrollsignale erwarteten, induzierten Signale erfasst werden, so wird ein Störungssignal erzeugt. Wird dieses beispielsweise einer Einbruchmeldezentrale zur Auslösung eines Alarms übermittelt, so wird durch das erfindungsgemäße Verfahren der Sabotageschutz wesentlich verbessert. Das Störungssignal kann jedoch auch einem sogenannten "Watchdog" zugeführt werden, um so eine Fehlalarmauslösung beim Auftreten einer technischen Störung zu vermeiden.

Wenn nachfolgend von "erste" und "zweiter" Spule die Rede ist, so ist alternativ jeweils auch die Primär- bzw. Sekundär-Leistungsspule gemeint.

Versuche haben gezeigt, dass es bei der bidirektionalen Übertragung und Erfassung der Kontrollsignale und der induzierten Signale in Einzelfällen zu Signalstörungen kommen kann. Um zu vermeiden, dass eine derartige Störung jeweils zu einer Alarmauslösung führt, wird vorzugsweise innerhalb des Zeitintervalls die erste und die zweite Spule jeweils mit zwei Kontrollsignalen beaufschlagt. Das Störungssignal wird erst bei Nichtbeaufschlagung oder Nichterfassung von beiden Kontrollsignalen oder beiden induzierten, zweiten Signalen erzeugt. Ein Störungssignal wird mit anderen Worten erst dann ausgelöst, wenn zwei aufeinanderfolgende Kontrollsignalzyklen als fehlerhaft identifiziert werden.

Bei einer besonders bevorzugten Weiterbildung des Verfahrens wird die erste oder die zweite Spule nach Erzeugung des induzierten Signals mit einem Response-Kontrollsignal beaufschlagt, welches wiederum in der jeweils anderen Spule ein induziertes Signal erzeugt.

Das Zeitintervall, in welchem miteinander korrelierte Signale erzeugt oder erfasst werden, beträgt vorzugsweise zwischen 10 ms und 500 ms, besonders bevorzugt etwa 60 ms.

Ein Kontrollsignal und ein zugehöriges Response-Kontrollsignal werden vorzugsweise innerhalb eines Zeitraums von 20 ms bis 100 ms, besonders bevorzugt von etwa 40 ms erzeugt.

Das Kontrollsignal kann prinzipiell beliebiger Art sein, die eine Erzeugung eines Signals in der jeweils anderen Spule auf induktive Weise ermöglicht. Besonders bevorzugt ist es jedoch, wenn das Kontrollsignal - besonders bevorzugt auch das Response-Kontrollsignal - durch Modulation einer Trägerspannung erzeugt wird. Hierzu kommen grundsätzlich sämtliche zur Modulation von Signalen bekannten Verfahren in Betracht. Besonders bevorzugt ist es jedoch, wenn zur bidirektionalen Übertragung die Trägerspannung durch das Kontrollsignal amplitudenmoduliert und das Response-Kontrollsignal frequenzmoduliert wird. Das Kontrollsignal wird vorzugsweise flügel-, das Response-Kontrollsignal vorzugsweise wandseitig erzeugt.

Die Trägerfrequenz der Trägerspannung ist abhängig von der Ausgestaltung des Spulensystems. Im Falle eines Spulensystems mit Gehäusen und Kernen, die MnZn-Ferrite umfassen, können - je nach MnZn-Material - Trägerfrequenzen von 20 kHz bis 2 MHz zum Einsatz kommen. Grundsätzlich ist es auch denkbar, Luftspulen einzusetzen. Die Trägerfrequenzen können dann auch höher sein.

Um den Schutz auch gegen aufwendige Sabotageverfahren zu erhöhen, die beispielsweise eine induktive Ankopplung einer Sabotagespule an die erste Spule anstatt der am Flügel vorgesehenen zweiten Spule beinhalten, sieht eine Weiterbildung des Verfahrens die Abfrage des Wertes eines flügelseitig angeordneten Kontrollwiderstandes innerhalb des Zeitintervalls vor. Der Kontrollwiderstandswert kann durch eine flügelseitige Meldegruppe imitiert und digitalisiert und wechselkodiert auf die Primärseite übertragen werden. Hierdurch wird ein weiteres Sabotagehindernis geschaffen, da bei einer induktiven Ankopplung zum Zwecke der Abkopplung der flügelseitigen Spule auch der Widerstandswert bekannt und das entsprechende Signal erzeugt werden müsste.

Der Abfragewert des Kontrollwiderstandes kann durch Modulation der an der zweiten Spule anliegenden Trägerspannung auf die erste Spule übertragen und dann mit einem Sollwert verglichen werden. Ein zweites Störungssignal kann dann beispielsweise zur Auslösung eines Alarms verwendet werden, wenn der ermittelte Wert einen bestimmten, noch zulässigen Differenzbetrag von einem Referenzwert übersteigt. Versuche haben gezeigt, dass zur Reduzierung des Fehlalarmrisikos der Differenzbetrag von etwa 40% des Widerstandswertes als Schwellenwert gut geeignet ist.

Um eine Sabotagemöglichkeit selbst für den Fall erheblich zu erschweren, dass der den Sabotageakt planenden Person auch der Widerstandswert bekannt ist, werden die ersten und zweiten Spulen vorzugsweise zumindest mit verschlüsselten Kontrollsignalen und Response-Kontrollsignalen beaufschlagt.

Die Möglichkeit der Entschlüsselung durch Unbefugte wird abermals erschwert, wenn - wie besonders bevorzugt - das Kontrollsignal und das Response-Kontrollsignal mit Hilfe eines Wechselcodes verschlüsselt werden.

Zur weiteren Erhöhung der Sicherheit gegen Sabotage kann das Verfahren den Verfahrensschritt der gegenseitigen Authentifizierung einer mit der ersten Spule elektrisch verbundenen Primärelektronik und einer mit der zweiten Spule verbundenen Sekundärelektronik umfassen.

Die Vorrichtung zur Durchführung des vorbeschriebenen Verfahrens umfasst eine an einer Wand vorgesehene erste Spule, eine an einem Flügel vorgesehene zweite Spule, wobei sich die ersten und zweiten Spulen in induktiver Wirkverbindung befinden, eine mit der ersten Spule verbundene Primärelektronik sowie eine mit der zweiten Spule verbundene Sekundärelektronik, wobei die Primär- und die Sekundärelektronik Mittel zur Erzeugung und Erfassung von Kontrollsignalen und Response-Kontrollsignalen umfassen.

Vorzugsweise umfasst die Primär- und die Sekundärelektronik Mittel zur Modulation einer Trägerspannung mit den Köntrollsignalen. Die Sekundärelektronik umfasst vorzugsweise einen Amplitudenmodulator, die Primärelektronik einen Frequenzmodulator.

Darüber hinaus sind vorzugsweise Mittel zur Authentifizierung der Primär- und der Sekundärelektronik vorgesehen.

Damit die Primär- und die Sekundärelektronik bei geschlossenem Flügel nicht ohne Zerstörungen erreichbar sind, umfassen die Primär- und die Sekundärelektronik jeweils ein Gehäuse, welches zum Einbau in ein Rahmenprofil oder in ein Flügelprofil, insbesondere in Profilaussparungen auf den bei geschlossenem Flügel einander zugewandten Seiten, geeignet ist.

Um einerseits Störungen der Primär- oder der Sekundärelektronik durch äußere elektrische Magnetfelder zu vermeiden, andererseits ein Austreten elektromagnetischer Strahlungen aus den Gehäusen zu verhindern, sind diese vorzugsweise abgeschirmt ausgebildet.

Um Überhitzungen der in den Gehäusen vorgesehenen elektronischen Bauteile, die regelmäßig selbst eine gewisse Wärme entwickeln, zu verhindern, sind die Gehäuse vorzugsweise aus einem Wärme leitenden Material, wegen der Vereinfachung der Herstellung besonders bevorzugt aus einem Wärme leitenden Kunststoffmaterial, hergestellt.

Ferner umfassen die Primär- und die Sekundärelektronik vorzugsweise Modems zur 8-Bit-Kodierung und Dekodierung von zu übertragenden Signalen und Kontrollsignalen. Mit Hilfe dieser Modems können auch von beispielsweise an dem Flügel vorgesehenen Einrichtungen und Sensoren übermittelte Analogsignale moduliert und störungsunempfindlich übertragen werden. Die Primär- und die Sekundärelektronik kann weiterhin jeweils ein BUS-System umfassen, an welches jeweils mehrere Sensoren angeschlossen sein können. Die Übertragung von mit Hilfe der Sensoren bereitgestellten Messwerten oder Betriebszuständen kann dann seriell nach Modulation und Demodulation beispielsweise unter Verwendung von Protokollen, die zum Beispiel dem RS 485 Standard entsprechen können, erfolgen.

Die Erfindung soll nachfolgend anhand des in der Zeichnung dargestellten Ausführungsbeispiels weiter erläutert werden. Es zeigen:
- Fig. 1: - schematisch - eine erfindungsgemäße Vorrichtung in einer teilweise aufgerissenen Darstellung der Band- und Flügelteile in einer perspektivischen Ansicht, mit schematisch angedeuteter Primär- und Sekundärelektronik;
- Fig.: 2 - wiederum schematisch - die Anordnung gemäß Fig. 1 in an einem Rahmen- und einem Flügelprofil, welches um eine Scharnierachse scharniergelenkig mit dem Rahmen verbunden ist, angebrachten Zustand;
- Fig. 3: ein Übersichts-Blockschaltbild dieser Vorrichtung;
- Fig. 4: ein Blockschaltbild der rahmenseitigen Primärelektronik dieser Vorrichtung;

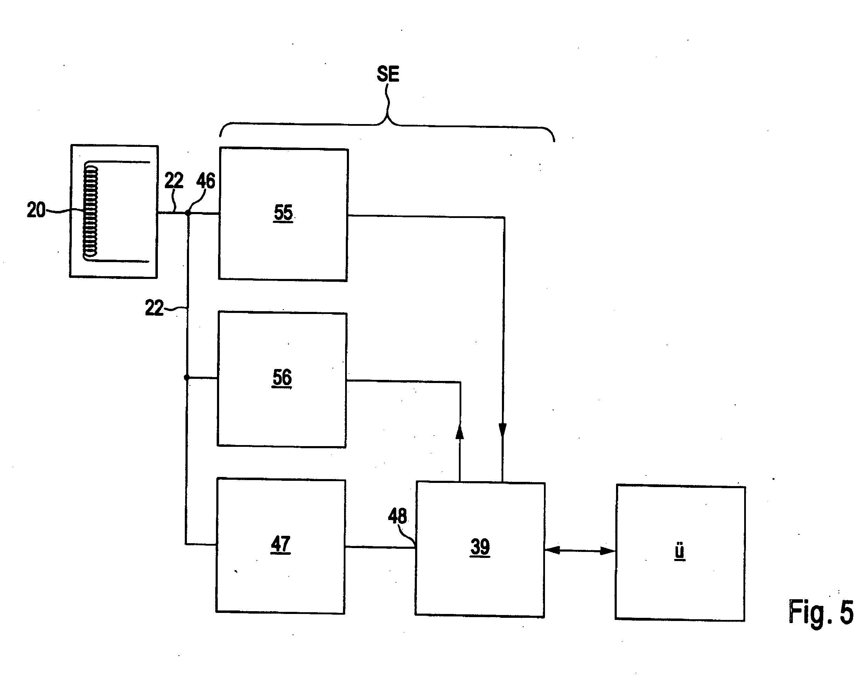

- Fig. 5: ein Blockschaltbild der flügelseitigen Sekundärelektronik dieser Vorrichtung;
- Fig. 6: eine Darstellung eines Längsschnitts durch die Scharnierachse S eines weiteren Ausführungsbeispiels einer erfindungsgemäßen Vorrichtung, der zugleich die Funktion eines herkömmlichen Bandes zukommt:
- Fig. 7: das Flügelbandteil dieses Ausführungsbeispiels in einer perspektivischen Einzelteildarstellung, die auch Wiedergaben der in dem Rahmenbandteil vorgesehenen Spulen umfasst;

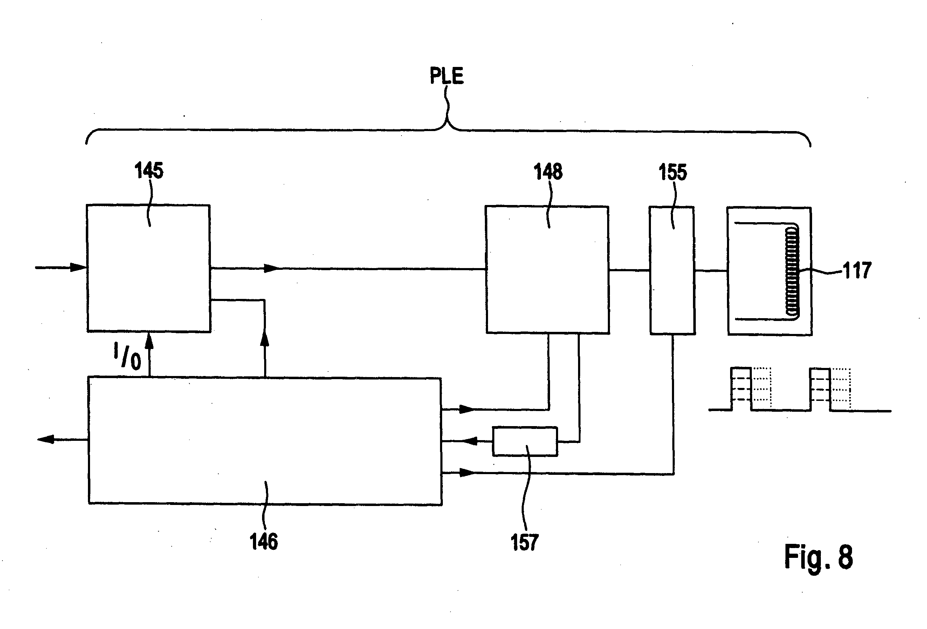

- Fig. 8: ein Blockschaltbild der rahmenseitigen Primär-Leistungselektronik dieses Ausführungsbeispiels sowie
- Fig. 9: ein Blockschaltbild der flügelseitigen Sekundär-Leistungselektronik dieses Ausführungsbeispiels.

Die in der Zeichnung als Ganzes mit 100 bezeichnete Vorrichtung ist optisch einem sogenannten dreiteiligen Band nachgebildet. Ihr kann - je nach Bedarf - zugleich tragende Scharnierfunktion zukommen und somit ein herkömmliches Band ersetzen. Oder sie dient lediglich der kontaktlosen Übertragung von elektrischer Energie und/oder elektrischen Signalen und wird zusätzlich zu herkömmlichen Bändern an einer Flügel/Wandanordnung vorgesehen.

Die Vorrichtung 100 umfasst ein Bandteil 1, welches der Festlegung an einem feststehenden Rahmen R dient. Es weist zwei Scharnierteile 2, 2' auf, die in Längsrichtung einer Scharnierachse S um einen Abstandsraum 3 voneinander beabstandet sind.

Zwischen dem oberen Scharnierteil 2 und dem unteren Scharnierteil 2' ist in dem Abstandsraum 3 das Scharnierteil 4 eines Flügelteils 5 angeordnet, welches bei dem in der Zeichnung dargestellten Ausführungsbeispiel an einem Flügelrahmen F angebracht ist. Zur Befestigung umfasst das Bandteil 1 Bandbefestigungsteile 6, 6', das Flügelteil 5 ein Flügelbefestigungsteil 7.

Die Scharnierachse S wird definiert durch einen die Scharnierteile 2, 2' und 4 durchsetzenden Bandbolzen 8, der die Scharnierteile in Bandbolzenaufnahmen, die in der Zeichnung der Übersicht halber nicht dargestellt sind, in bekannter Weise durchsetzt.

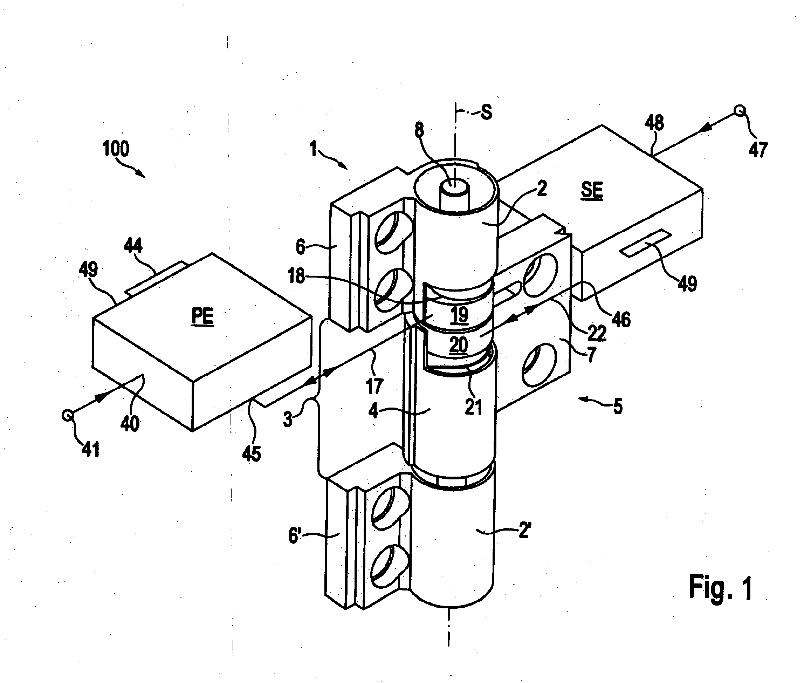

In dem oberen Scharnierteil 2 des Bandteils 1 ist eine erste elektrische Spule 19 vorgesehen, die von einer Schraubenfeder 18 mit einer gemäß Fig. 1 nach unten wirkenden Federkraft beaufschlagt ist. Die Spule 19 ist mit Hilfe einer mehradrigen, vorzugsweise abgeschirmten elektrischen Leitung 17 mit einer Primärelektronik PE verbunden.

In das Scharnierteil 4 des Flügelteils 5 ist eine zweite elektrische Spule 20 eingesetzt, welche mit Hilfe einer Schraubenfeder 21 mit einer gemäß Fig. 1 nach oben gerichteten Federkraft beaufschlagt wird. Die ersten und zweiten Spulen liegen unter Wirkung der Schraubenfedern 18, 21 aneinander an.

Die zweite Spule 20 ist über eine mehradrige, vorzugsweise abgeschirmte elektrische Leitung 22 mit einer Sekundärelektronik SE verbunden.

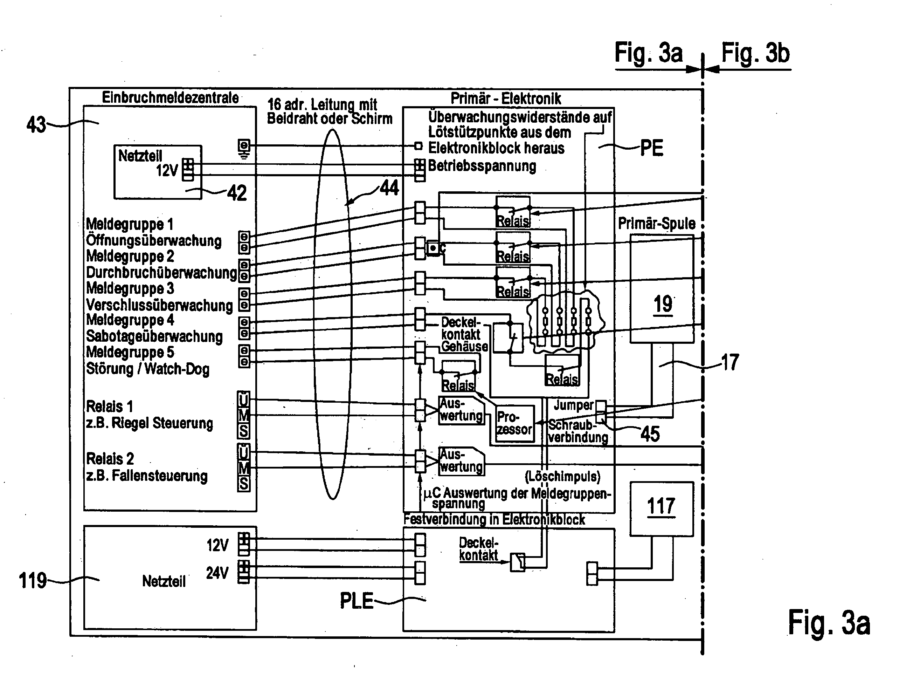

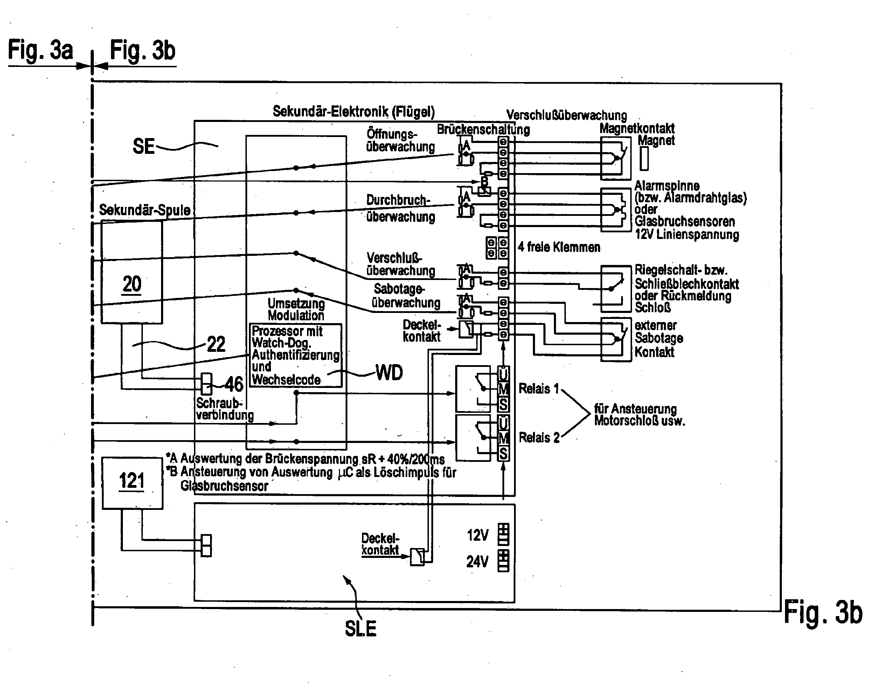

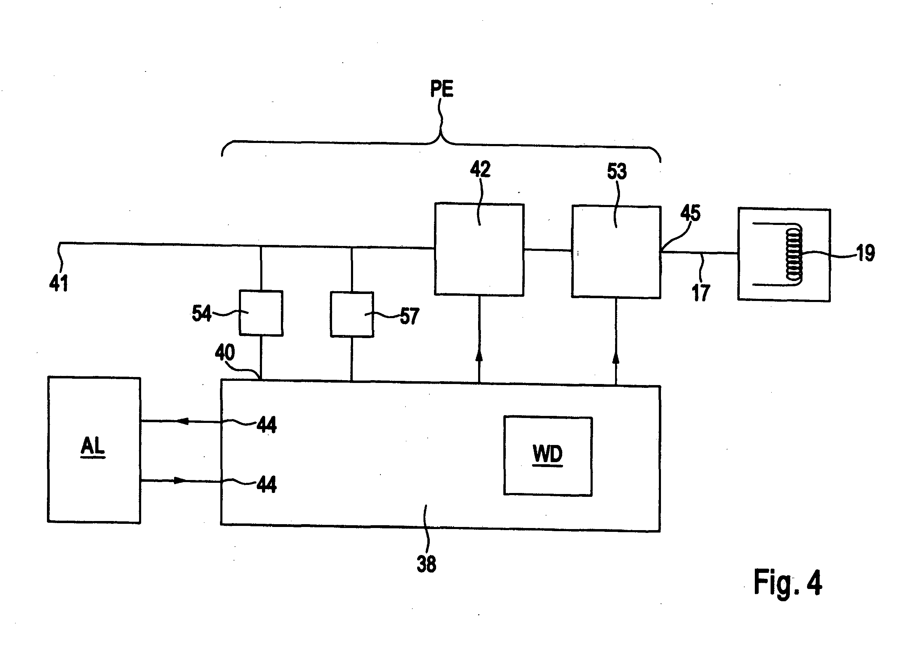

Die Primärelektronik PE (Fig. 4) weist einen Primärprozessor 38 mit einem Eingang 40 auf, welcher dem Anschluss an eine Energieversorgungsquelle 41 über einen Schaltregler 54, der die von der Energieversorgungsquelle bereitgestellte Spannung in die Betriebsspannung des Primärprozessors umformt, dient. Bei dieser kann es sich - wie in Fig. 3 erkennbar ist - um einen notstromgepufferten Ausgang eines Netzteils 42 einer Einbruchmeldezentrale 43 handeln. Es stellt eine Versorgungs-Gleichspannung von beispielsweise 12V oder 24V zur Verfügung. Die Primärelektronik PE umfasst einen Wechselrichter 42, welcher die EingangsGleichspannung in eine zur Beaufschlagung der ersten Spule 19 geeignete Wechselspannung beispielsweise von 12V und einer Trägerfrequenz von 100 kHz umwandelt. Da sich die Eingangsspannung in einem Bereich zwischen beispielsweise 6V bis 30V bewegen kann, ist ein Schaltregler 54' vorgesehen.

Der Primärprozessor 38 weist Anschlüsse 44 auf, an welche beispielsweise Signale von Öffnungs-, Durchbruch-, Verschluss- und Sabotageüberwachungen sowie Steuersignale beispielsweise zur Riegelbetätigung einer Gefahrenmeldeanlage AL angelegt werden. Diese Steuersignale werden von der Primärelektronik mit Hilfe eines BUS-Systems unter Verwendung beispielsweise von Protokollen, die dem RS 485 Standard entsprechen, in serielle Datensätze umgewandelt.

Auch umfasst der Primärprozessor 38 einen Watchdog, der die Funktionen der Primär- und Sekundärelektroniken sowie der daran angeschlossenen Komponenten und Systeme überwacht. Im Falle der Erkennung einer Fehlfunktion wird dies der Gefahrenmeldeanlage als solche signalisiert, um eine Fehlalarmauslösung beim Auftreten der Fehlfunktion zu vermeiden. Ferner kann der Watchdog Programmanweisungen des Primärprozessors 38 zur Problembeseitigung einleiten.

Ferner umfasst die Primärelektronik PE einen Modulator 53, mittels welchem die Trägerfrequenz durch die zu übertragenden Datensätze moduliert wird. Die modulierte Trägerspannung liegt an einem Ausgang 45 an und wird über die elektrische Leitung 17 der ersten Spule 19 zugeleitet.

In der zweiten Spule 20 wird eine Sekundärspannung induziert und über die Leitung 22 einem Anschluss 46 der Sekundärelektronik SE zugeleitet. Sie umfasst einen Demodulator 55, welcher die durch die Signale modulierte Sekundärspannung demoduliert und die Signale einem Sekundärprozessor 39 beispielsweise einer Öffnungs-, Durchbruch-, Verschluss- oder Sabotageüberwachung Ü übermittelt. An den Sekundärprozessor sind über In/Out-Leitungen Sensoren und Einrichtungen zur Zustandsabfrage und Betätigung angeschlossen.

Der Sekundärprozessor 39 ist mit einer Energieversorgungsquelle 47 verbunden, die beispielsweise eine 5V Gleichspannung an einem Eingang 48 bereitstellt. Die Sekundärelektronik SE umfasst einen Wechselrichter, der diese Eingangsspannung in eine 12 V Wechselspannung mit einer geeigneten Frequenz von beispielsweise 100 kHz umwandelt. Die Energieversorgung der Sekundärelektronik erfolgt über eine induktiv in der Sekundärspule 20 erzeugte Versorgungsspannung.

Ferner umfasst die Sekundärelektronik SE wiederum einen Modulator 56, welcher von den Sensoren der vorgenannten Überwachungseinrichtungen über Anschlüsse 49 bereitgestellte Signale in serielle Signalpakete in eine primärseitige Demodulation ermöglichende Weise umwandelt. Die so modulierte Trägerspannung wird über die Leitung 22 an die zweite Spule 20 angelegt. Die hierdurch in der ersten Spule 19 induzierte Wechselspannung wird über die Leitung 17 der Primärelektronik PE zugeleitet und in dieser in einem Demodulator 57 demoduliert sowie über Anschlüsse 44 der Gefahrenmeldeanlage zugeführt.

Die somit geschaffene bidirektionale Datenübertragung erfolgt mit einer 8-Bit-Auflösung und einer Übertragungsrate von beispielsweise 2400 Baud.

Zur Erhöhung des Sabotageschutzes wird von der Primärelektronik PE in einem Zeitintervall von 40 ms ein Kontrollsignalpaket über die Leitungen 17 und 22 sowie die ersten und zweiten Spulen 19 und 20 der Sekundärelektronik SE übermittelt. Diese quittiert den Empfang des Kontrollsignalpakets durch Rückübermittlung eines Response-Kontrollsignalpakets an die Primärelektronik PE in diesem Zeitintervall. Ferner findet in diesem Zeitintervall ein weiterer Übermittlungszyklus von Kontroll- und Response-Kontrollsignalen statt. Empfängt die Primärelektronik PE innerhalb dieses Zeitintervalls nicht zumindest ein Response-Kontrollsignal, so wird an einem Ausgang 44 der Primärelektronik PE ein Störsignal erzeugt, welches zur Störungs- oder Alarmauslösung verwendet werden kann.

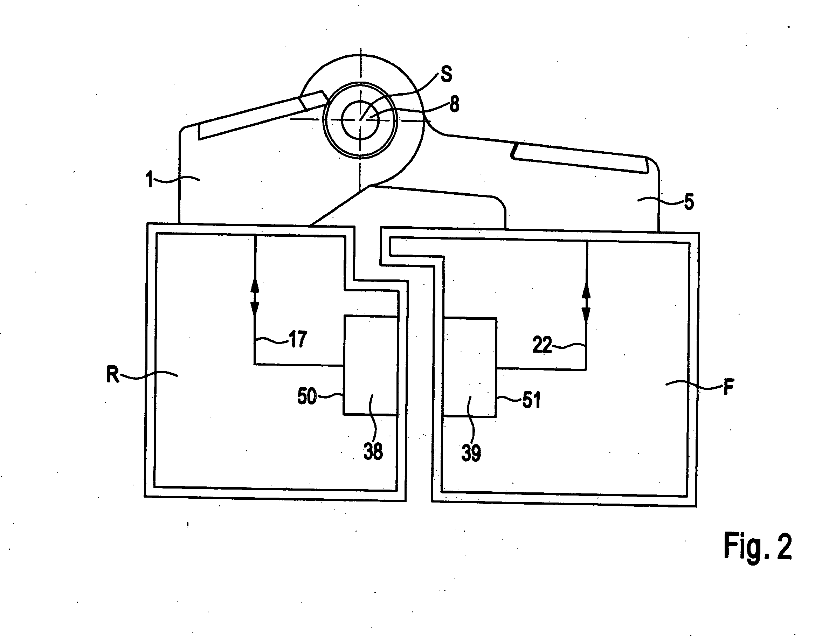

Die Primärelektronik PE und die Sekundärelektronik SE sind in mechanisch widerstandsfähigen, gut wärmeleitfähigen Gehäusen 50, 51 untergebracht, die lediglich in Fig. 2 schematisch dargestellt sind.

Das Gehäuse 50 der Primärelektronik PE ist in ein wandseitiges Rahmenprofil, das Gehäuse 51 der Sekundärelektronik SE in ein Flügelprofil eingebaut. Der Einbau erfolgt - wie Fig. 2 entnehmbar ist - von den Profilseiten her, die bei geschlossenem Flügel einander zugewandt sind. Durch diese Maßnahme sind die Gehäuse 50, 51 von außen nicht sichtbar und können durch einen Sabotagekontakt, der bei einem Entnahmeversuch ein Alarmsignal erzeugt, gegen Manipulationen geschützt sein.

Um die Sabotagesicherheit weiterhin zu erhöhen, sind gleichwohl die Primärelektronik PE und die Sekundärelektronik SE mit Mitteln zur gegenseitigen Authentifizierung versehen, so dass ein unbemerkter Austausch einer Primär- oder Sekundärelektronik PE, SE durch eine zuvor manipulierte Elektronik zumindest wesentlich erschwert ist.

Das vorbeschriebene Ausführungsbeispiel der erfindungsgemäßen Vorrichtung dient in erster Linie der Signalübertragung. Die zum Betrieb der Sekundärelektronik benötigte elektrische Leistung wird ebenfalls induktiv in der Sekundärspule induziert. Regelmäßig sind zur Betätigung der sekundärseitigen Vorrichtungen jedoch höhere elektrische Leistungen erforderlich, als von der Primär- in der Sekundärspule bei Aufrechterhaltung der Signalübertragung induzierbar sind. In diesem Falle wird eine separate elektrische Leistungsversorgung für die Betätigung der sekundärseitigen Vorrichtungen benötigt.

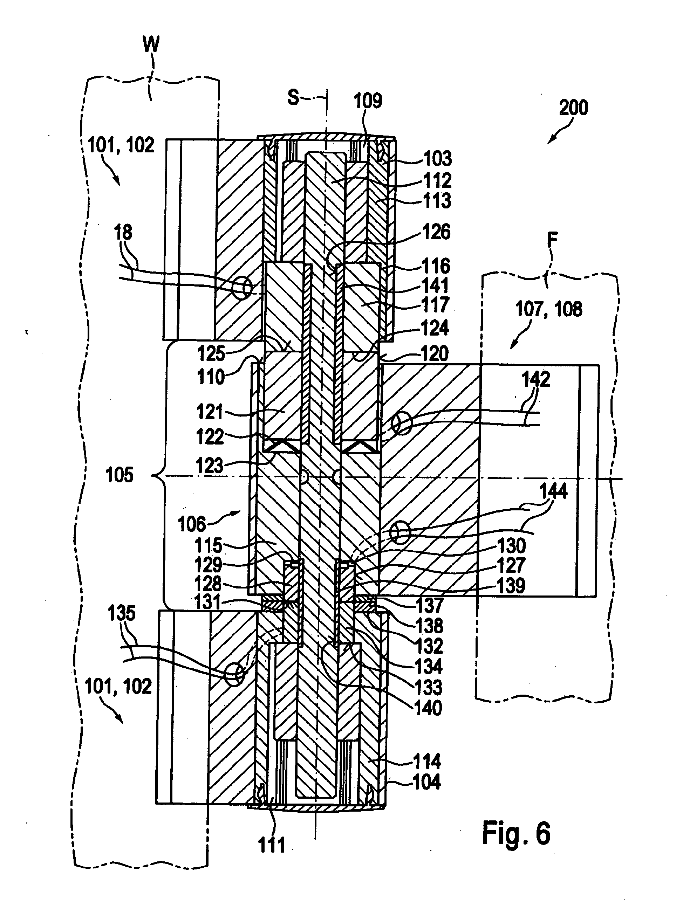

Diese elektrische Leistungsversorgung erfolgt bei dem in Fig. 6 ff dargestellten Ausführungsbeispiel, welches als Ganzes mit 200 bezeichnet ist, ebenfalls durch induktive Ankopplung. Diese Vorrichtung 200 ist als sogenanntes dreiteiliges Band ausgebildet. Es umfasst ein Rahmenbandteil 101, welches ein Bandteil 102 der Vorrichtung 200 bildet und welches der Festlegung an einer feststehenden Wand W bzw. an einem feststehenden Rahmen dient. Das Rahmenbandteil 101 weist zwei Scharnierteile 103, 104 auf, die in Längsrichtung einer Scharnierachse S voneinander um einen Abstandsraum 105 voneinander beabstandet sind.

Zwischen dem oberen Scharnierteil 103 und dem unteren Scharnierteil 104 ist in dem Abstandsraum 105 das Scharnierteil 106 eines Flügelbandteils 107 angeordnet, welches bei dem in der Zeichnung dargestellten Ausführungsbeispiel ein an dem Flügel F befestigbares Flügelteil 108 bildet.

Die Scharnierachse S wird definiert durch einen die Scharnierteile 103, 104 und 106 in Bolzenaufnahmen 109, 110 und 111 durchsetzenden Bandbolzen 112. Er ist in den Bandbolzenaufnahmen 109, 111 der Scharnierteile 103, 104 des Rahmenbandteils 101 in bekannter Weise senkrecht zur Scharnierachse S justierbar mit Hilfe von Lagerbuchsen 113, 114 gelagert, die aus einem Kunststoffmaterial gefertigt sind.

Der Lagerung des Bandbolzens 112 in der Bandbolzenaufnahme 110 des Flügelscharnierteils 106 dient eine Lagerbuchse 115, die wiederum aus einem Kunststoff-Lagerwerkstoff gefertigt ist.

Die Lagerbuchse 113 des oberen Rahmenscharnierteils 103 weist in ihrem zum Flügelscharnierteil 106 hin weisenden Bereich eine um die Schamierachse S rotationssymmetrische Ausnehmung 16 auf, in welche eine elektrische Primärspule 117 eingesetzt ist. Sie ist mit Hilfe zweier elektrischer Anschlusskabel 118 mit einer Leistungsspannungsversorgung 119 (s. Fig. 3) verbunden.

Die Lagerbuchse 115 des Flügelscharnierteils 106 umfasst auf der der Primärspule 117 zugewandten Seite ebenfalls eine Ausnehmung 120, in die eine Sekundärspule 121 eingepasst ist, welche in einer der Primärspule 117 entsprechenden Weise aufgebaut ist.

Die Sekundärspule 121 ist in Richtung der Scharnierachse S verschiebbar in der Ausnehmung 120 gelagert und stützt sich über ein Federelement 122 am Boden 123 der Ausnehmung 120 ab, so dass die einander zugewandten Stirnseiten 124, 125 der Primär- und der Sekundärspule 117, 121 aneinanderliegen.

Die Primär- und Sekundärspulen 117, 121 weisen einen Außendurchmesser auf, der nahezu dem Innendurchmesser der Bolzenaufnahmen 113, 115 entspricht. Hierdurch wird die durch die Abmessungen des oberen Rahmenscharnierteils 103 und des Flügelscharnierteils 106 vorgegebene Querschnittsfläche von der Primär-und der Sekundärspule 117, 121 bestmöglich ausgenutzt, um so die induktiv von der Primärspule 117 in die Sekundärspule 121 übertragbare, elektrische Leistung zu maximieren.

Zum Zwecke der Verbesserung der Ankopplung von Primär- und Sekundärspule 117, 121 und zur Erhöhung der Sicherheit gegen Einbruch und Sabotage, wie weiter unten noch beschrieben werden wird, weist der Bandbolzen 112 über die Länge, über die er von Primär- und Sekundärspule 117, 121 überdeckt ist, eine Einschnürung 126 auf. In dieser Einschnürung ist ein zwei Halbschalen aus einem gesinterten Ferritmaterial, beispielsweise auf Basis von Mangan-Zink-Ferrit-Pulver, umfassender Hülsenkern 141 eingebracht. Der den Hülsenkern 141 umfassende Bandbolzen 112 dient somit als magnetischer Flusslettkörper.

In dem der Sekundärspule 121 gegenüberliegenden Bereich des Flügelscharnierteils 106 ist in die Lagerbuchse 115 eine weitere, zur Scharnierachse S symmetrische Ausnehmung 127 eingearbeitet. Sie dient der Aufnahme einer Signalübertragungsspule 128, die auch als "zweite Spule" bezeichnet ist. Die Signalübertragungsspule 128 ist wiederum in Richtung der Scharnierachse S verschiebbar in der Ausnehmung 127 aufgenommen und stützt sich an deren Boden 129 mit Hilfe eines Federelements 130 ab.

Mit der dem Federelement 130 gegenüberliegenden Stirnseite 131 liegt die Signalübertragungsspule 128 an einer Stirnseite 132 einer weiteren, in einer entsprechenden Ausnehmung 133 gelagerten Signalübertragungsspule 134, auch "erste Spule" genannt, an. Die Signalübertragungsspule 134 ist mit Hilfe von Anschlusskabeln 135 mit einer Primärelektronik PE verbunden (s. Fig. 3). Die Wirkungsweise und Ausgestaltung der Signalübertragungsspulen und der Primär- und Sekundärelektroniken entsprechend denjenigen der anhand der Vorrichtung 100 erläuterten.

Zwischen dem unteren Rahmenscharnierteil 104 und dem Flügelscharnierteil 106 sind Gleitscheiben 137, 138 vorgesehen, um den durch eine Schwenkbetätigung des Bandes hervorgerufenen Verschleiß zu verringern.

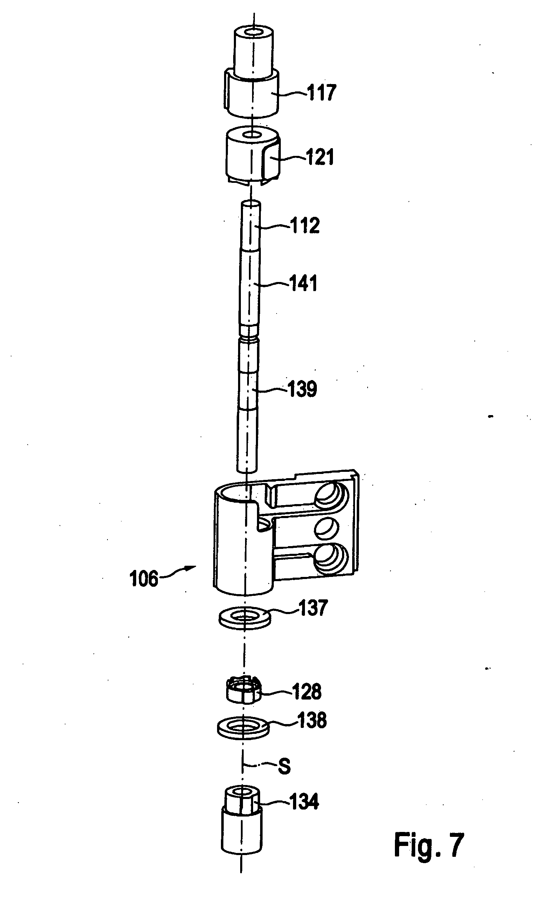

Wie insbesondere in Fig. 6 und 7 erkennbar ist, weisen die Signalübertragungsspulen 128, 134 deutlich geringere Abmessungen als die Primär- und Sekundär-Leistungsspulen 117, 121 auf, da für die Signalübertragung geringere Spulenvolumina ausreichend sind. Auch ist die im Überdeckungsbereich der Signalübertragungsspulen 128, 134 wiederum in einer Einschnürung 140 des Bandbolzens 112 vorgesehene Hülse 139 aus einem zwei Halbschalen aus einem gesinterten Ferritmaterial, beispielsweise auf Basis von Mangan-Zink-Ferrit-Pulver mit einer erheblich geringeren Wandstärke als der Hülsenkern 141 ausgestattet, so dass insgesamt der Bereich der Signalübertragungsspulen zur Übertragung größerer mechanischer Kräfte zwischen Wand- bzw. Rahmen und Flügel als der Bereich der Primär- und Sekundärspulen 117, 121 geeignet ist. Der Ausgestaltung der Vorrichtung 200 mit zwei separaten Spulenpaaren zur Leistungs- und zur Signalübertragung kommt somit selbständige erfinderische Bedeutung zu.

Von einem Netzteil einer Einbruch-Meldezentrale wird eine Leistungs-Gleichspannung von beispielsweise 12 V oder 24 V zur Verfügung gestellt. Sie liegt an einem Schaltreger 145 an, welcher diese Spannung in eine zur Erzeugung einer benötigten Sekundärleistungsspannung geeignete Versorgungsspannung umformt. Ihr Wert liegt regelmäßig konstant zwischen 14 V und 36 V. Dem Schaltregler 145 nachgeschaltet sind ein Demodulator 147 und ein Wechselrichter 148, die beide auch an den Primär-Leistungsprozessor 146 angeschlossen sind. Der Wechselrichter 148 formt die Ausgangsspannung des Schaltreglers 145 in eine zur Beaufschlagung der Primärspule 147 geeignete, vorzugsweise rechteckförmige Wechselspannung um, die bei dem dargestellten Ausführungsbeispiel 14 - 36 V beträgt und eine Frequenz von 40 kHz aufweist und über einen Ein/Aus-Schalter 155 an der Primärleistungsspule 117 anliegt. Es wird in der Sekundär-Leistungsspule 121 - von Übertragungsverlusten und Phasenverschiebungen abgesehen - etwa eine entsprechende Sekundär-Leistungsspannung induziert, die mit Hilfe von Kabeln 142 (auch als Leitung bezeichnet) einer Sekundär-Leistungselektronik SLE (s. Fig. 3) zugeführt wird.

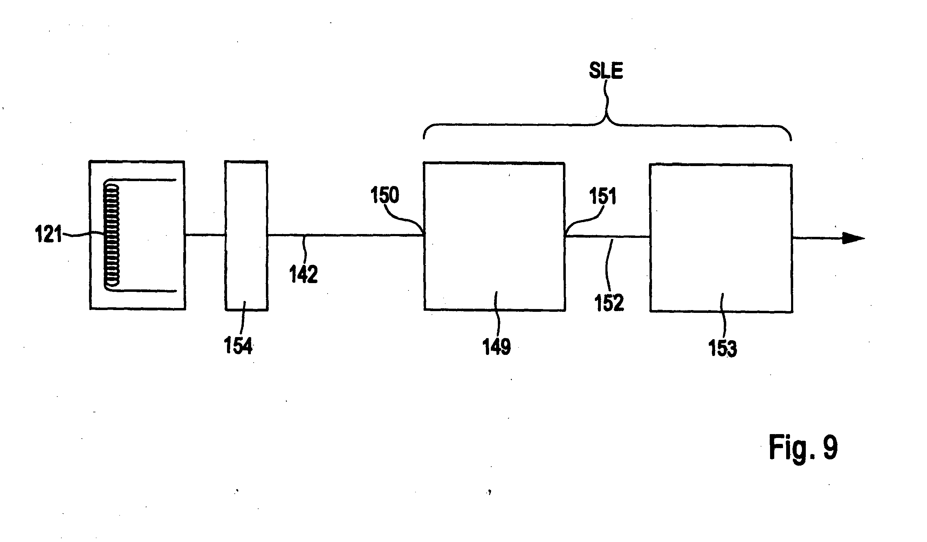

Die Sekundär-Leistungsspannung liegt am Eingang 150 eines Gleichrichters 149 an, welcher an seinem Ausgang 151 eine Leistungs-Gleichspannung für die Betätigung der sekundärseitigen, im oder am Flügel vorgesehenen Vorrichtung dient (siehe Fig. 9). Die Leistungsspannung liegt über eine Leitung 152 ebenfalls an einem Sekundärleistungsprozessor 153 an. Dieser misst den anliegenden Spannungswert und steuert einen Modulator 154, der zwischen die Sekundärspule 121 und den Gleichrichter 149 in die Leitung 142 eingeschaltet ist, an.

Der Modulator 154 erzeugt ein vom Spannungswert abhängiges, amplitudenmoduliertes elektrisches Signal im 2 kHz-Frequenzbereich (2K-Band), welches über die Leitung 142 an der Sekundär-Leistungsspule 121 anliegt.

Dieses amplitudenmodulierte Signal induziert in der Primär-Leistungsspule 117 ein sekundär-leistungsspannungsabhängiges Signal, mit welchem über den Demodulator 147 der Primärleistungsprozessor 146 angesteuert wird. Letzterer führt hinsichtlich der Sekundär-Leistungsspannung einen Soll/Istwert-Vergleich durch und steuert den Schaltregler 145 oder den Wechselrichter 148 im Sinne eines Abgleichs. Aufgrund dieser Maßnahme ist sichergestellt, dass sekundärseitig stets die zur Betätigung der flügelseitigen Vorrichtungen erforderliche elektrische Leistung zur Verfügung steht.

Die vorbeschriebenen Ausgestaltungen der Primär- und Sekundär-Leistungselektroniken PLE, SLE können in erfinderischer Weise zur Verbesserung des Sabotageschutzes genutzt werden. Es hat sich überraschender Weise gezeigt, dass bereits eine geringe Verlagerung des Bandbolzens 112 und damit auch des Hülsenkerns 141 aus seiner zu den Spulen 117, 121 symmetrischen Position zu einer solchen Verstimmung des Systems Primär/Sekundär-Leistungsspule 117, 121 und Hülsenkern 141 führt, dass zur Erzielung einer gewünschten sekundärseitigen, elektrischen Leistung eine wesentlich höhere primärseitige, elektrische Leistung erforderlich ist. Ein Ziehen des Bandbolzens zum Zwecke eines Einbruchs oder einer Sabotage kann somit durch Ermittlung der erforderlichen Primärleistung erfasst und zur Erzeugung eines Alarmsignals an einem Ausgang 156 der Primär-Leistungselektronik genutzt werden. Eine Verbesserung des Einbruchs- und Sabotageschutzes ist aufgrund der vorbeschriebenen Maßnahme daher erzielbar, ohne dass es hierzu eines bidirektionalen Austauschs von Kontrolldatenpaketen bedarf.

### Bezugszeichenliste:

- 100: Vorrichtung
- 1: Bandteil
- 2, 2': Scharnierteile
- 3: Abstandsraum
- 4: Scharnierteil
- 5: Flügelteil
- 6, 6': Wandbefestigungsteile
- 7: Flügelbefestigungsteil
- 8: Bandbolzen
- 17: elektrische Leitung
- 18: Schraubenfeder
- 19: erste Spule
- 20: zweite Spule
- 21: Schraubenfeder
- 22: elektrische Leitung
- 38: Primärprozessor
- 39: Sekundärprozessor
- 40: Eingang
- 41: Energieversorgungsquelle
- 42: Netzteil
- 43: Einbruchmeldezentrale
- 44: Anschlüsse
- 45: Anschluss
- 46: Anschluss
- 47: Energieversorgungsquelle
- 48: Eingang
- 49: Anschlüsse
- 50: Gehäuse
- 51: Gehäuse
- 52: Wechselrichter
- 53: Modulator
- 54: Schaltregler
- 55: Demodulator
- 56: Modulator
- 57: Demodulator
- F: Flügelrahmen
- R: Rahmen
- S: Scharnierachse
- PE: Primärelektronik
- AL: Gefahrenmeldeanlage
- SE: Sekundärelektronik
- 200: Vorrichtung
- 101: Rahmenbandteil
- 102: Bandteil
- 103: Scharnierteil
- 104: Scharnierteil
- 105: Abstandsraum
- 106: Scharnierteil
- 107: Flügelbandteil
- 108: Flügelteil
- 109: Bolzenaufnahme
- 110: Bolzenaufnahme
- 111: Bolzenaufnahme
- 112: Bandbolzen
- 113: Lagerbuchse
- 114: Lagerbuchse
- 115: Lagerbuchse
- 116: Ausnehmung
- 117: Primär-Leistungsspule
- 118: Anschlusskabel
- 119: Leistungsspannungsversorgung
- 120: Ausnehmung
- 121: Sekundär-Leistungsspule
- 122: Federelement
- 123: Boden
- 124: Stirnseite
- 125: Stirnseite
- 126: Einschnürung
- 127: Ausnehmung
- 128: Signalübertragungsspule
- 129: Boden
- 130: Federelement
- 131: Stirnseite
- 132: Stirnseite
- 133: Ausnehmung
- 134: Signalübertragungsspule
- 135: Anschlusskabel
- 136: Primärelektronik
- 137: Gleitscheibe
- 138: Gleitscheibe
- 139: Hülse
- 140: Einschnürung
- 141: Hülse
- 142: Kabel
- 144: Kabel
- 145: Schaltreger
- 146: Primär-Leistungsprozessor
- 147: Demodulator
- 148: Wechselrichter
- 149: Gleichrichter
- 150: Eingang
- 151: Ausgang
- 152: Leitung
- 153: Sekundär-Leistungsprozessor
- 154: Modulator
- 155: Schalter
- 156: Ausgang
- F: Flügel
- S: Scharnierachse
- W: Wand
- WD: Watchdog
- PLE: Primär-Leistungselektronik
- SLE: Sekundär-Leistungselektronik
- Ü: Einheit

## Patentansprüche

1. Verfahren zur kontaktlosen Übertragung von elektrischer Energie zwischen einer Wand (W) und einem an dieser Wand (W) um eine Scharnierachse (S) scharniergelenkig befestigten Flügel (F), bei dem eine an der Wand (W) befestigte Primär-Leistungsspule (117) und eine an dem Flügel (F) befestigte Sekundär-Leistungsspule (121) vorgesehen sind, die sich mit Hilfe eines Bandbolzens (112) in induktiver Wirkverbindung befinden, mit einer Vorrichtung nach einem der Ansprüche 4 bis 8,
**dadurch gekennzeichnet,**
**dass** die in der Sekundär-Leistungsspule (121) induzierte Sekundär-Leistungsspannung erfasst und mit einem Sollwert verglichen wird,
**dass** die an der Primär-Leistungsspute (117) angelegte Primär-Leistung anhand des Sekundär-Leistungsspannungs-Soll/Istwertvergleich beeinflusst wird,
**dass** die zum Erzielen des Sollwerts der Sekundär-Leistungsspannung erforderliche Primär-Leistung erfasst wird,
und **dass** bei Übersteigen einer vorbestimmten, zur Erzielung des Sollwerts der Sekundär-Leistungsspannung erforderlichen Primär-Leistung ein Signal ausgelöst wird.

2. Verfahren nach Anspruch 1, **dadurch gekennzeichnet, dass** der erfasste Sekundär-Leistungsspannungswert in ein wertabhängig moduliertes elektrisches Signal umgeformt und die Sekundär-Leistungsspule (121) mit diesem Signal beaufschlagt wird, so dass in der Primär-Leistungsspule (117) ein demodulierbares, sekundärleistungsspannungsabhängiges Signal induziert wird.

3. Verfahren nach Anspruch 2, **dadurch gekennzeichnet, dass** das demodulierbare, sekundärleistungs-spannungsabhängige Signal demoduliert und eine die Primär-Leistung beeinflussende Einrichtung mit Hilfe des demodulierten Signals angesteuert wird.

4. Vorrichtung (200) zur kontaktlosen Übertragung von elektrischer Energie zwischen einer Wand (W) und einem an dieser Wand (W) um eine Scharnierachse (S) scharniergelenkig befestigten Flügel (F),
mit einer an der Wand (W) befestigten Primär-Leistungsspule (117),
mit einer an dem Flügel befestigten Sekundär-Leistungsspule (121),
und mit einem als magnetischer Flussleitkörper zwischen der Primär-Leistungsspule (117) und der Sekundär-Leistungsspule (121) dienenden Bandbolzen (112), mit einer Einrichtung zur Beeinflussung der Primär-Leistung,
und mit einem sekundärseitigen Modulator (154), welcher die Sekundär-Leistungsspule (121) mit einem sekundärspannungsabhängigen, modulierten Signal beaufschlagt,
**dadurch gekennzeichnet,**
**dass** die Vorrichtung einen primärseitigen Demodulator (147), welcher das in der Primär-Leistungsspule (117) aufgrund des sekundärspannungsabhängigen, modulierten Signals induzierte Signal demoduliert,
eine Einrichtung zur Ermittlung einer Soll/Istwert-Abweichung der Sekundär-Leistungsspannung
und eine Einrichtung umfasst, die bei Übersteigen einer vorbestimmten, zur Erzielung einer gewünschten, sekundärseitigen elektrischen Leistung erforderlichen Primär-Leistung ein Signal auslöst, wobei die Einrichtung zur Beeinflussung der Primär-Leistung einen Schaltregler (145) und/oder einen Pulsweitenmodulator aufweisenden Wechselschalter (148) umfasst.

5. Vorrichtung nach Anspruch 4, **dadurch gekennzeichnet, dass** die Einrichtung zur Ermittlung einer Soll/Istwert-Abweichung der Sekundär-Leistungsspannung in einer einen Primär-Leistungsprozessor (146) umfassenden Primär-Leistungselektronik (PLE) vorgesehen ist.

6. Vorrichtung nach Anspruch 5, **dadurch gekennzeichnet, dass** ein die in der Sekundär-Leistungsspule (121) induzierte Sekundär-Leistungsspannung in eine Gleichspannung umgewandelter Gleichrichter (149) vorgesehen ist, der zwecks Übermittlung des Gleichspannungswerts mit einem Sekundär-Leistungsprozessor (153) verbunden ist.

7. Vorrichtung nach einem der Ansprüche 5 oder 6, **dadurch gekennzeichnet, dass** der Sekundär-Leistungsprozessor (153) mit dem Modulator (154) wirkverbunden ist.

8. Vorrichtung nach einem der Ansprüche 5 bis 7, **dadurch gekennzeichnet, dass** die Primär-Leistungselektronik (PLE) einen Wechselrichter (148) umfasst.

## Claims

1. Method for the contactless transmission of electrical energy between a wall (W) and a leaf (F) which is hinged about a hinge axis (S) and fastened to this wall (W), in which a primary power coil (117) which is fastened to the wall (W) and a secondary power coil (121) which is fastened to the leaf (F) are provided which are in inductive operative connection by means of a hinge bolt (112), using a device according to one of Claims 4 to 8,
**characterized in that**
the secondary power voltage induced in the secondary power coil (121) is detected and compared to a setpoint value,
the primary power applied to the primary power coil (117) is influenced based on the comparison of the setpoint value and the actual value of the secondary power voltage,
the primary power necessary for achieving the setpoint value of the secondary power voltage is detected,
and a signal is triggered when a predetermined primary power necessary for achieving the setpoint value of the secondary power voltage is exceeded.

2. Method according to Claim 1, **characterized in that** the detected secondary power voltage value is transformed into an electrical signal which is modulated as a function of the value, and the secondary power coil (121) is acted on by this signal, so that a demodulatable signal which is a function of the secondary power voltage is induced in the primary power coil (117).

3. Method according to Claim 2, **characterized in that** the demodulatable signal which is a function of the secondary power voltage is demodulated, and a unit which influences the primary power is controlled by means of the demodulated signal.

4. Device (200) for the contactless transmission of electrical energy between a wall (W) and a leaf (F) which is hinged about a hinge axis (S) and fastened to this wall (W),
having a primary power coil (117) which is fastened to the wall (W),
and having a secondary power coil (121) which is fastened to the leaf,
and having a hinge bolt (112) which is used as a magnetic flux conductor body between the primary power coil (117) and the secondary power coil (121), using a unit for influencing the primary power,
and having a secondary-side modulator (154) which acts on the secondary power coil (121) with a modulated signal which is a function of the secondary voltage,
**characterized in that**
the device includes a primary-side demodulator (147) which demodulates the signal which is induced in the primary power coil (117) based on the modulated signal which is a function of the secondary power voltage,
a unit for determining a setpoint/actual deviation of the secondary power voltage,
and a unit which triggers a signal when a predetermined primary power necessary for achieving a desired secondary-side electrical power is exceeded, wherein the unit includes a toggle switch (148), having a switching controller (145) and/or a pulse-width modulator, for influencing the primary power.

5. Device according to Claim 4, **characterized in that** the unit for determining a setpoint/actual deviation of the secondary power voltage is provided in a primary electronics system (PLE) which includes a primary power processor (146).

6. Device according to Claim 5, **characterized in that** a rectifier (149) which transforms the secondary power voltage induced in the secondary power coil (121) into a direct voltage is provided which is connected to a secondary power processor (153) for the purpose of transmitting the direct voltage value.

7. Device according to one of Claims 5 or 6, **characterized in that** the secondary power processor (153) is in operative connection with the modulator (154).

8. Device according to one of Claims 5 to 7, **characterized in tha**t the primary electronics system (PLE) includes an inverter (148).

## Revendications

1. Procédé pour la transmission sans contact d'énergie électrique entre un mur (W) et un battant (F) fixé à ce mur (W) de façon articulée par charnière autour d'un axe de charnière (S), dans lequel il est prévu une bobine de puissance primaire (117) fixée au mur (W) et une bobine de puissance secondaire (121) fixée au battant (F), lesquelles sont reliées par une liaison fonctionnelle inductive à l'aide d'un tourillon de paumelle (112), avec un dispositif selon l'une des revendications 4 à 8, **caractérisé en ce que**
la tension d'alimentation secondaire induite dans la bobine de puissance secondaire (121) est détectée et comparée avec une valeur de consigne,
**en ce que** la puissance primaire appliquée à la bobine de puissance primaire (117) est influencée à l'aide de la comparaison entre la valeur de consigne et la valeur effective de la tension d'alimentation secondaire,
**en ce que** la puissance primaire nécessaire pour atteindre la valeur de consigne de la tension d'alimentation secondaire est détectée,
et **en ce qu'**un signal est déclenché en cas de dépassement d'une puissance primaire nécessaire pour atteindre la valeur de consigne de la tension d'alimentation secondaire.

2. Procédé selon la revendication 1, **caractérisé en ce que** la valeur détectée de la tension d'alimentation secondaire est transformée en un signal électrique modulé dépendant de la valeur, et la bobine de puissance secondaire (121) reçoit ce signal, de sorte qu'un signal démodulable dépendant de la tension d'alimentation secondaire est induit dans la bobine de puissance primaire (117).

3. Procédé selon la revendication 2, **caractérisé en ce que** le signal démodulable dépendant de la tension d'alimentation secondaire est démodulé, et un dispositif influençant la puissance primaire est actionné à l'aide du signal démodulé.

4. Dispositif (200) pour la transmission sans contact d'énergie électrique entre un mur (W) et un battant (F) fixé à ce mur (W) de façon articulée par charnière autour d'un axe de charnière (S),
avec une bobine de puissance primaire (117) fixée au mur (W),
avec une bobine de puissance secondaire (121) fixée au battant,
et avec un tourillon de paumelle (112) servant comme corps magnétique conducteur de flux entre la bobine de puissance primaire (117) et la bobine de puissance secondaire (121), avec un moyen destiné à influencer la puissance primaire, et avec un modulateur côté secondaire (154), lequel applique un signal modulé dépendant de la tension d'alimentation secondaire à la bobine de puissance secondaire (121),
**caractérisé en ce que**
le dispositif comprend un démodulateur côté primaire (147), lequel démodule le signal induit dans la bobine de puissance primaire (117) en raison du signal modulé dépendant de la tension d'alimentation secondaire,
un moyen destiné à déterminer un écart entre la valeur de consigne et la valeur effective de la tension d'alimentation secondaire,
et un moyen destiné à déclencher un signal lors d'un dépassement d'une puissance primaire nécessaire pour atteindre une puissance électrique souhaitée côté secondaire, le moyen destiné à influencer la puissance primaire comprenant un régulateur de commutation (145) et/ou un commutateur inverseur (148) comportant un modulateur de largeur d'impulsion.

5. Dispositif selon la revendication 4, **caractérisé en ce que** le moyen destiné à déterminer un écart entre la valeur de consigne et la valeur effective de la tension d'alimentation secondaire est prévu dans une électronique de puissance primaire (PLE) comprenant un processeur de puissance primaire (146).

6. Dispositif selon la revendication 5, **caractérisé en ce qu'**il est prévu un redresseur (149) convertissant la tension d'alimentation secondaire induite dans la bobine de puissance secondaire (121) en une tension continue, lequel est relié à un processeur de puissance secondaire (153) pour la transmission de la valeur de la tension continue.

7. Dispositif selon l'une des revendications 5 ou 6, **caractérisé en ce que** le processeur de puissance secondaire (153) est relié fonctionnellement au modulateur (154).

8. Dispositif selon l'une des revendications 5 à 7, **caractérisé en ce que** l'électronique de puissance primaire (PLE) comprend un onduleur (148).
